(19) Europäisches Patentamt
European Patent Office
Office européen des brevets

(11) **EP 4 404 107 A1**

(12) **EUROPEAN PATENT APPLICATION**

(43) Date of publication:
**24.07.2024 Bulletin 2024/30**

(21) Application number: **23152975.1**

(22) Date of filing: **23.01.2023**

(51) International Patent Classification (IPC):
**G06N 10/60** $^{(2022.01)}$    **G06N 5/01** $^{(2023.01)}$

(52) Cooperative Patent Classification (CPC):
**G06N 10/60; G06N 5/01**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Volkswagen Aktiengesellschaft
38440 Wolfsburg (DE)**

(72) Inventors:
- **Cattelan, Michele
  80636 München (DE)**
- **Yarkoni, Sheir
  81543 München (DE)**

(54) **A METHOD FOR SOLVING PARITY ENCODED OPTIMIZATION PROBLEMS HAVING HIGH-ORDER INTERACTION TERMS ON QUANTUM ANNEALING HARDWARE**

(57)    A method (100) for solving parity encoded optimization problems having high-order interaction terms on quantum annealing hardware (10) is proposed, wherein an optimization problem is encoded in a function f of terms of quantized variables s, wherein a parity encoded function f' is obtained from the function f by replacing the quantized variables s and products of the quantized variables s with constrained parity variables s' and by adding additional terms of higher than quadratic order in the constrained parity variables s' representing constraints on the constrained parity variables s', wherein a transformed function f" is obtained by introducing unconstrained parity variables y by replacing terms of higher than quadratic order in the constrained parity variables s' with terms of at most quadratic order in the constrained parity variables s' and in the unconstrained parity variables y.

Fig. 5

EP 4 404 107 A1

Processed by Luminess, 75001 PARIS (FR)

**Description**

The present invention relates to a method for solving parity encoded optimization problems having high-order interaction terms on quantum annealing hardware, wherein an optimization problem is encoded in a function f of terms of quantized variables s, wherein a parity encoded function f' is obtained from the function f by replacing the quantized variables s and products of the quantized variables s with constrained parity variables s' and by adding additional terms of higher than quadratic order in the constrained parity variables s' representing constraints on the constrained parity variables s'.

In current state-of-the-art quantum annealing hardware, qubits are manufactured with rigid layout topologies. Therefore, not every problem can be expressed natively using this topology. In the prior art, to solve this issue a user needs to map their problem to the native topology of the quantum annealing hardware using a technique called minor-embedding. This is done by introducing additional qubits to represent single variables in the original problem, which introduces a significant overhead in the number of variables which need to be solved and is known to affect performance of quantum annealing hardware. In addition, this process needs to be done for every new problem a user wished to solve.

Furthermore, current quantum annealing hardware can only simulate interactions using pairs of variables. Simulating higher order terms such as groups of three, four or more variables, requires introducing additional variables, which are again represented as extra qubits. This results in a significant overhead in the form of additional variables in the problem which then also needs to be mapped to the hardware topology.

Mapping problems to a fixed topology with minor-embedding is done manually by inspecting each problem variable and all its neighbors and mapping each one to a specific qubit (or set of qubits) in the quantum annealing hardware and imposing additional constraints ensuring the solution to the embedded problem is the same as the solution of the original problem. There exist software tools which use heuristic or non-deterministic approaches to find such embeddings, but it is known that finding such embeddings is both time consuming and computationally difficult.

A different technique is known as parity encoding, in which each interaction between variables, not just pairs, is simulated using a single new variable. These new variables are than constrained to ensure that the solution space is the same as the original problem being solved. On the market of quantum annealing hardware a compiler as a service is offered which maps combinatorial optimization problems to these parity encodings. Currently, in the state of the art, parity encoded optimization problems can only run on simulations of quantum annealing hardware, but not on the quantum annealing hardware itself.

Possible implementations of parity compilers which can be considered as input to the present invention are discussed inter alia in "Parity Quantum Optimization: Compiler"; Ender et al. (arXiv:2105.06233v1) and "Parity Quantum Optimization: Encoding Constraints", Drieb-Schön et al. (arXiv:2105.06235v1).

Applications of quantum annealing hardware are discussed inter alia in "Quantum annealing for industry applications: introduction and review", Sheir Yarkoni et al. 2022 Rep. Prog. Phys. 85 104001; S. Yarkoni, A. Alekseyenko, M. Streif, D. Von Dollen, F. Neukart and T. Bäck, "Multi-car paint shop optimization with quantum annealing," 2021 IEEE International Conference on Quantum Computing and Engineering (QCE), Broomfield, CO, USA, 2021, pp. 35-41; and "Traffic Flow Optimization Using a Quantum Annealer", Neukart et al., Front. ICT, 20 December 2017 Sec. Quantum Engineering and Technology Volume 4 - 2017.

Prior art document US 2018/0101784 A1 discloses a computational system including digital circuitry and analog circuitry, for instance a digital processor and a quantum processor. The quantum processor can operate as a sample generator providing samples. Samples can be employed by the digital processing in implementing various machine learning techniques. The computational system can perform unsupervised learning over an input space, for example via a discrete variational auto-encoder, and attempting to maximize the log-likelihood of an observed dataset. Maximizing the log-likelihood of the observed dataset can include generating a hierarchical approximating posterior. Unsupervised learning can include generating samples of a prior distribution using the quantum processor. Generating samples using the quantum processor can include forming chains of qubits and representing discrete variables by chains. WO 2022/008057 A1 discloses a method of determining a quantum operation control layout for a quantum computation on a quantum system. The quantum computation is to be carried out on constituents of the quantum system arranged in accordance with a mesh. Vertices of the mesh represent possible sites for the constituents of the quantum system. Each cell of the mesh indicates that quantum interactions between constituents of the quantum system arranged in that cell are possible during the quantum computation.

It is an object of the present invention to provide a method for solving parity encoded optimization problems having high-order interaction terms on quantum annealing hardware, wherein the optimization problem can be natively mapped on the topology of existing quantum annealing hardware to reduce computational overhead and to increase computational efficiency. In particular, the present invention allows direct use of the quantum annealing hardware. A simulation of quantum annealing hardware can be avoided.

To solve this object a method for solving parity encoded optimization problems having high-order interaction terms on quantum annealing hardware is proposed, wherein an optimization problem is encoded in a function f of terms of quantized variables s, wherein a parity encoded function f' is obtained from the function f by replacing the quantized variables s and products of the quantized variables s with constrained parity variables s' and by adding additional terms of higher than quadratic order in the constrained parity variables s' representing constraints on the constrained parity variables s', and wherein a transformed function f" is obtained by introducing unconstrained parity variables y by replacing terms of higher than quadratic order in the constrained parity variables s' with terms of at most quadratic order in the constrained parity variables s' and in the unconstrained parity variables y.

Preferably the method, in particular the step of obtaining a parity encoded function f' from the function f by replacing the quantized variables s and products of the quantized variables s with constrained parity variables s' and by adding additional terms of higher than quadratic order in the constrained parity variables s' representing constraints on the constrained parity variables s', and the step of obtaining a transformed function f" by introducing unconstrained parity variables y by replacing terms of higher than quadratic order in the constrained parity variables s' with terms of at most quadratic order in the constrained parity variables s' and in the unconstrained parity variables y, is conducted on a computer.

Preferably, the transformed function f" is encoded and/or mapped to a topology of a quantum annealing hardware, and further preferably the quantum annealing hardware solves the optimization problem.

Thus, it may be preferred that after the transformed function f" has been obtained using a computer, a quantum annealing hardware solves the optimization problem.

The method of the present invention may be used for different implementations of applications in quantum optimization, for example traffic optimization, logistics and supply chain optimization like solving the traveling salesman problem as well as optimization of production scheduling, for example in a paint shop of a vehicle manufacturer.

The quantized variables s may or may not be constrained.

Preferably the terms of at most quadratic order in the constrained parity variables s' and in the unconstrained parity variables y are terms of exactly quadratic order.

The terms of at most quadratic order in the constrained parity variables s' and in the unconstrained parity variables y of the transformed function f" may represent parity constraints on the constrained parity variables s' and on the unconstrained parity variables y.

Preferably, the optimization problem is the problem of finding a solution to an Ising model. The Ising model is a mathematical model of para-magnetism in statistical mechanics. The model consists of discrete variables that represent magnetic dipole moments of spins that can be in one of two states (+1 or -1, or +1 or 0). Solving the Ising model means to find spin combinations that have the lowest energy.

Thus, preferably the function f is a Hamiltonian H, in particular a Hamiltonian H of an Ising model, wherein the parity encoded function f' is a parity encoded Hamiltonian H', and wherein the transformed function f" is a transformed Hamiltonian H".

Furthermore preferably, the constraints on the constrained parity variables s' ensure that a solution to the optimization problem by solving the parity encoded function f' and/or the transformed function f" is a valid solution of the function f.

Thus, if the function f is a Hamiltonian H, in particular a Hamiltonian H of an Ising model, the constraints on the constrained parity variables s' ensure that a solution to the optimizing problem found by solving the parity encoded Hamiltonian H' and/or the transformed Hamiltonian H" is a valid solution of the original Hamiltonian H.

The construction of the parity encoded function f', in particular of the parity encoded Hamiltonian H', by replacing the quantized variables s of the function f, in particular of the Hamiltonian H, and products of the quantized variables s with constrained parity variables s' and by adding additional terms of higher than quadratic order in the constrained parity variables s' representing constraints on the constrained parity variables s' is known to the skilled person.

For example prior art document WO 2022/008057 A1 provides a method for obtaining a parity encoded function f' from the original function f.

As a non-limiting example to the present invention, the smallest three variable fully connected Ising model may be considered, having the Hamiltonian $H = s_1 s_2 + s_1 s_3 + s_2 s_3$. In the Hamiltonian H the variables $s_1$, $s_2$ and $s_3$ represent the quantized variables and relate to the orientation of the spins. As known in the prior art a parity encoded Hamiltonian H' can be obtained from the original Hamiltonian H by replacing the quantized variables $s_1$, $s_2$ and $s_3$ and products of the quantized variables with constrained parity variables $s_{12}'$, $s_{13}'$ and $s_{23}'$. The parity encoded Hamiltonian H' for the original Hamiltonian H would be $H' = s_{12}' + s_{13}' + s_{23}'$, where $s_{12}' = s_1 s_2$, $s_{13}' = s_1 s_3$ and $s_{23}' = s_2 s_3$.

In order to ensure that a solution to the parity encoded Hamiltonian H' is a valid solution of the original Hamiltonian H, additional terms of higher than quadratic order in the constrained parity variables $s_{12}'$, $s_{13}'$ and $s_{23}'$ need to be added. The fully parity encoded Hamiltonian H' then reads $H' = s_{12}' + s_{13}' + s_{23}' - 2 s_{12}' s_{13}' s_{23}'$. As can be seen from the parity encoded Hamiltonian H', a higher than quadratic term $-2 s_{12}' s_{13}' s_{23}'$ is needed to encode the parity constraints.

According to the present invention, terms of higher than quadratic order in the constrained parity variables s' are replaced by introducing additional unconstrained parity variables y.

In the following, this introduction of additional unconstrained parity variables y is explained purely as an example and in a non-limiting way with reference to a 3-body (degree 3 polynomial) Ising model Hamiltonian H.

$$H = s_1 + s_2 + s_4 + 2s_2s_3 + 2s_2s_5 + 4s_3s_4 + 4s_4s_5 - s_1s_2s_3 + s_2s_3s_4.$$

The parity encoded Hamiltonian H' is constructed as known in the art:

$$H' = s_1' + s_2' + s_4' + 2s_{23}' + 2s_{25}' + 4s_{34}' + 4s_{45}' - s_{123}' + s_{234}' + C$$

with $s_1' = s_1$, $s_2' = s_2$, $s_4' = s_4$, $s_{23}' = s_2s_3$, $s_{25}' = s_2s_5$, $s_{34}' = s_3s_4$, $s_{45}' = s_4s_5$, $s_{123}' = s_1s_2s_3$ and $s_{234}' = s_2s_3s_4$.

The necessary constraints on the constrained parity variables $s_1'$, $s_2'$, $s_4'$, $s_{23}'$, $s_{25}'$, $s_{34}'$, $s_{45}'$, $s_{123}'$ and $s_{234}'$ are encoded in the additional term C of the parity encoded Hamiltonian H'.

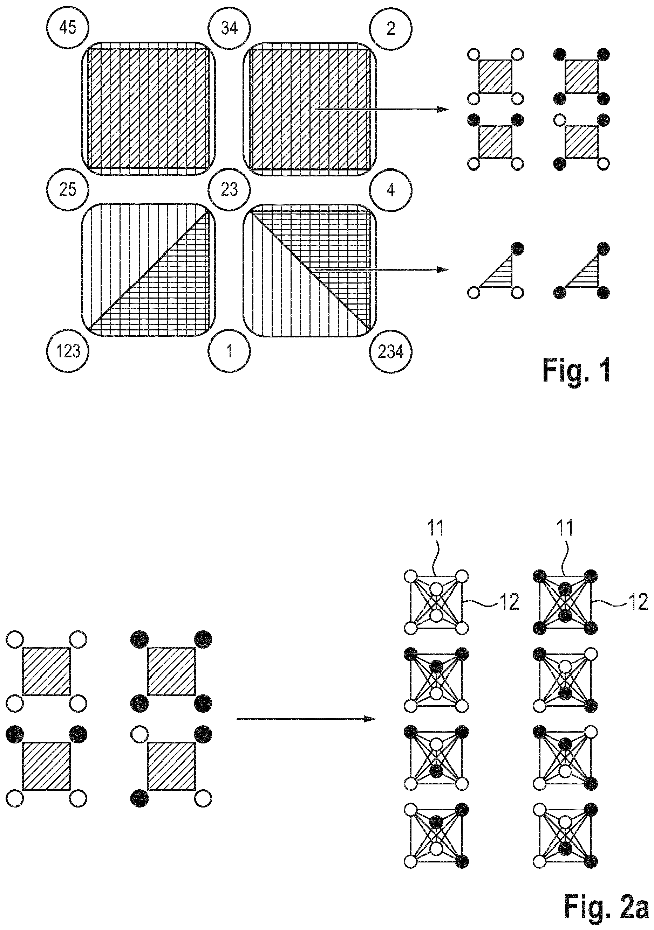

These constraints on the constrained parity variables s' are usually represented graphically as shown in Fig. 1.

The invention is furthermore disclosed in the attached figures.

Fig. 1      shows a graphical representation of parity constraints on constrained parity variables s',
Fig. 2a     shows a transformation of square constraints to constraint graphs,
Fig. 2b     shows a transformation of triangle constraints to constraint graphs,
Fig. 3      shows a combination of graphs,
Fig. 4      shows a grid constructed from unit tile constraint graphs,
Fig. 5      shows an encoding of nodes of a graph onto a quantum annealer hardware topology, and
Fig. 6      shows a flow diagram of a method for solving parity encoded optimization problems.

In Fig. 1 the left-hand side squares and triangles encode combinations of the constrained parity variables $s_1'$, $s_2'$, $s_4'$, $s_{23}'$, $s_{25}'$, $s_{34}'$, $s_{45}'$, $s_{123}'$ and $s_{234}'$. The numbers in the circles at the corners of the squares and triangles represent a single term in the parity encoded Hamiltonian H'. For example, the circle with the number 123 in the lower left of Fig. 1 represents the term $s_{123}'$. In the squares and triangles on the right hand-side of Fig. 1, the black and white dots represent the values the parity variables s' ($s_1'$, $s_2'$, $s_4'$, $s_{23}'$, $s_{25}'$, $s_{34}'$, $s_{45}'$, $s_{123}'$, $s_{234}'$) can assume under the parity constraints. A black dot indicates that the corresponding constrained parity variable s' is +1, wherein a white dot indicates that the corresponding constrained parity variable s' is -1. In each of the square or triangle constraints the number of white dots must be even in the minimum for the constraints to be valid. It is important to note that the parity constraints can also be formulated in the basis +1 and 0. In this case a black dot would indicate that the corresponding constrained parity variable s' is +1 and a white dot would indicate that the corresponding constrained parity variable s' is 0.

In the method of the present invention, additional unconstrained parity variables y are introduced which are used to replace the terms of higher than quadratic order of the constrained parity variables s' ($s_1'$, $s_2'$, $s_4'$, $s_{23}'$, $s_{25}'$, $s_{34}'$, $s_{45}'$, $s_{123}'$ $s_{234}'$) with terms of at most quadratic order in the constrained parity variables s' and in the unconstrained parity variables y.

For example, the square parity constraints in Fig. 1 result in additional the additional terms:

$$-12 \sum_{k=1,2} y_k - 7 \sum_i s_i' + 4 \sum_{j=1,2} y_j \sum_i s_i' + 2 \sum_{i<j} s_i's_j' + 8y_1y_2$$

and the triangle parity constraints of Fig. 1 would result in the terms

$$-8y - 5 \sum_i s_i' + 4y \sum_i s_i' + 2 \sum_{i<j} s_i's_j'$$

These terms encoding the parity constraints only contain quadratic terms in the constrained parity variables s' and in the unconstrained parity variables y and, thus, can be efficiently mapped to the topology of existing quantum annealing hardware. The parity constraints have been written here in the +1/-1 basis. However, it is also possible to formulate the parity constraints in the +1/0 basis. The method can be conducted in both bases.

It has to be stressed that the above example of the method is provided for illustration only and does not limit the invention in any way.

Preferably, the terms of the transformed function f'' are represented by a constraint graph, wherein the nodes of the graph represent the constrained parity variables s' and the unconstrained parity variables y, and wherein the terms of quadratic order in the constrained parity variables s' and in the unconstrained parity variables y are represented as edges between the nodes. The constraint graph can be a locally fully connected graph, i.e. in f'' the connections between the constrained parity variables s' and the unconstrained parity variables y, which can be represented by the constraint graph, are all local. They are fully connected between small groups of variables, but preferably not all constrained parity variables s' and/or unconstrained parity variables y are connected to all other constrained parity variables s' and/or unconstrained parity variables y. In particular, a constraint graph may be defined as a fully connected graph for the parity variables s' and y within that constraint.

Since the transformed function f'' and or the terms of the transformed function f'' may represent parity constraints on the constrained parity variables s' and on the unconstrained parity variables y, it may also and/or equivalently be preferred that the parity constraints of the transformed function f'' are represented by a constraint graph, wherein the nodes of the graph represent the constrained parity variables s' and the unconstrained parity variables y, and wherein the parity constraints on the constrained parity variables s' and on the unconstrained parity variables y are represented as the nodes and edges between the nodes.

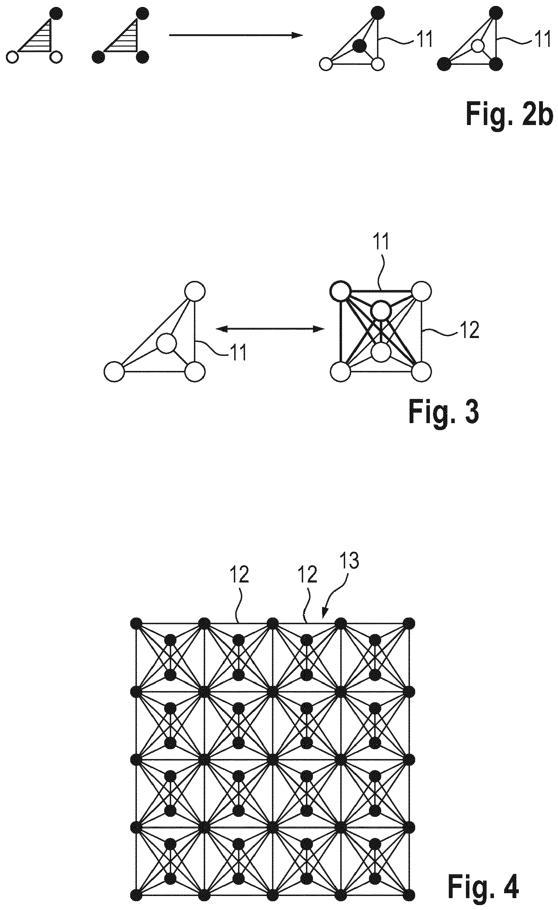

The introduction of the unconstrained parity variables y can also be represented graphically, as shown in Fig. 2.

In Fig. 2a on the left-hand side, the original constraints of Fig. 1 for the square constraints are shown. On the right-hand side of Fig. 2a, these constraints are represented by constraint graphs 11 which also include the new unconstrained parity variables y.

Fig. 2b shows the same transformation from the triangle constraints to corresponding constraint graphs 11 including the unconstrained parity variables y.

In the constraint graphs 11 in each of the corners a circle or node represents one constrained parity variable s'. The black and white dots in the inner region of the graphs 11 are the unconstrained parity variables y.

It is enlightening to note that the constraint graphs 11 regarding the square constraints are effectively two triangle constraints glued together as shown in Fig. 3.

The transformed function f'', in particularly transformed Hamiltonian H'' comprising the constrained parity variables s' and the unconstrained parity variables y as represented in the constraint graphs 11 on the right-hand side of Figs. 2a and 2b can be natively mapped to a quantum annealing hardware, as described further below, thus reducing or avoiding the extensive computational overhead required for the known minor-embedding methods.

Because a preferred application of the present method relates to solving the Ising model, which means that the function f is the Ising Hamiltonian H, it is preferred that the quantized variables s are spin variables.

Further preferably, the quantized variables s can take only two values, in particular +1 and -1, or +1 and 0.

Still further preferably, the constrained parity variables s' are quantized, and/or the unconstrained parity variables y are quantized.

Thus, it may be preferred that the constrained parity variables s' can take only two values, in particular +1 and -1, or +1 and 0, and/or that the unconstrained parity variables y can take only two values, in particular +1 and -1, or +1 and 0.

While the choice of values +1 and -1 or +1 and 0 is the most commonly used convention, it is important to note that other conventions and other values may be used.

Furthermore, it is preferred that multiple instances of the, preferably locally fully connected, constraint graph, are connected to form a grid of the constraint graphs. Each instance of the constraint graph represents a square or triangle constraint as in Figs. 2a and 2b.

Thus, the constraint graphs 11 on the right-hand side of Figs. 2a and 2b can be understood as unit tiles 12 of a larger grid 13 or grid like structure. Such a grid 13 can be obtained by "stitching" together the graphical representations Figs. 2a and 2b as shown in Fig. 4. Such a grid 13 is scalable and fixed and can be constructed using only square constraints.

Still further preferably, the terms of the transformed function f'' and/or the nodes of the constraint graph, and/or the nodes of the grid of the constraint graphs are mapped onto a topology of a quantum annealing hardware.

Furthermore, it is preferred that each term of the transformed function f'' and/or each node of the constraint graph, and/or each node of the grid of the constraint graphs is mapped onto a group of qubits of the quantum annealing hardware.

By the introduction of the unconstrained parity variables y, the transformed function f'', in particular the transformed Hamiltonian H'', or its graphical representation in terms of the constraint graphs 11 of Figs. 2a and 2b or the grid 13 of Fig. 4 can easily mapped to the topology of a quantum annealing hardware.

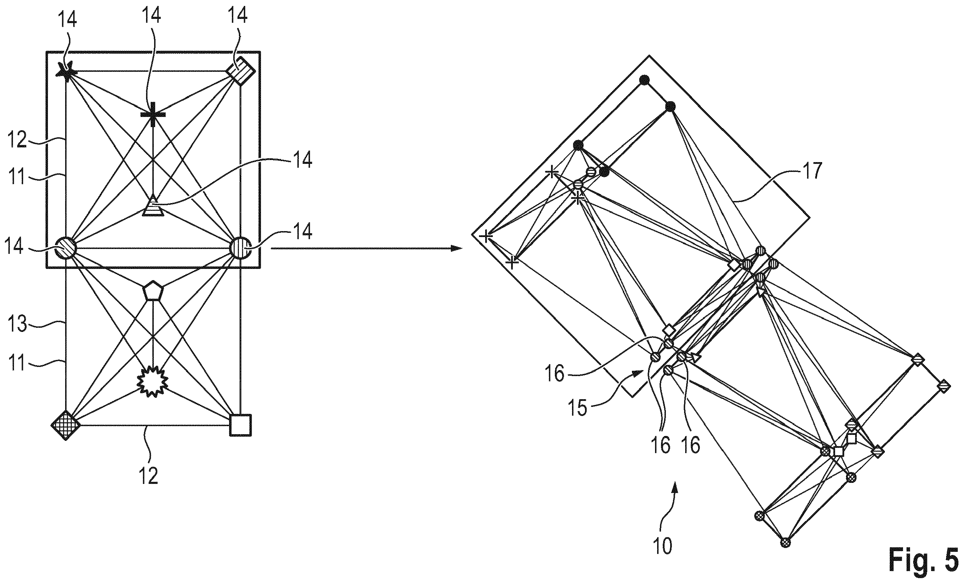

This is shown in Fig. 5. On the left-hand side of Fig. 5, a small section of the grid 13 of Fig. 4 comprising only two of the unit tiles 12 constraint graphs 11 is shown. The upper unit tile 12 constraint graph 11 can be mapped to the fixed topology of a quantum annealing hardware 10, in particular of the D-Wave Advantage quantum processor. A detailed description of the topology of the D-Wave Advantage quantum processor can be found in https://arxiv.org/abs/2003.00133.

In Fig. 5 each node 14 of the unit tile graph is mapped on a group 15 of qubits 16 of the topology of the quantum annealing hardware 10. In Fig. 5 each group 15 of qubits 16 corresponding to a node 14 of the graph 11 or grid 13 is represented by a different marker.

Because of the regular pattern of the graphic representation of the transformed function f" or the transformed Hamiltonian H", respectively, the projection of the terms of f" or H" onto the quantum annealing hardware can be done easily without computational overhead.

The black edges 17 in the representation of the topology of the quantum annealing hardware 10 correspond to the quadratic terms in the transformed function f" or the transformed Hamiltonian H". Thus, via this mapping the quantum annealing hardware can solve, in particular minimize, the optimization problem.

Preferably the quantum annealing hardware has a fixed topology which only has quadratic interaction terms.

Thus, by constructing the transformed function f" or the transformed Hamiltonian H", respectively, using unconstrained parity variables y it can be achieved that the transformed function f" or the transformed Hamiltonian H" only comprises terms of at most quadratic order in the constrained parity variables and the unconstrained parity variables, which can be efficiently mapped onto a fixed topology quantum annealing hardware, which only has quadratic interaction terms.

Preferably, the quantum annealing hardware solves the optimization problem by calculating, in particular minimizing, the transformed function f" mapped to the topology via the constraint graph and/or the grid, and wherein the corresponding quantized variables s of the function f are reconstructed from the constrained parity variables s' and in the unconstrained parity variables y of the solution calculated by the quantum annealing hardware

After the quantum annealing hardware has found a solution to the optimization problem the quantized variables of the original function f or the original Hamiltonian H respectively can be constructed from the constrained parity variables s' and the unconstrained parity variables y, which have been calculated as a solution by the quantum annealing hardware.

A further solution to the object of the present invention is a computer program product comprising instructions which, when the program is executed by a computer, cause the computer to carry out the steps of the method described above.

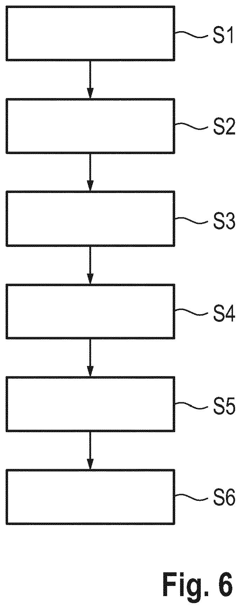

Fig. 6 shows a flow diagram of a method 100 for solving parity encoded optimization problems having high-order interaction terms on quantum annealing hardware 10.

In a first step S1, the optimization problem is encoded in a function f in terms of quantized variables s.

In a second step S2, a parity encoded function f' is obtained from the function f by replacing the quantized variables s and products of the quantized variables s with constrained parity variables s' and by adding additional terms of higher than quadratic order in the constrained parity variables s' representing constrains on the constrained parity variables s'.

In a third step S3, a transformed function f" is obtained by introducing unconstrained parity variables y by replacing terms of higher order than quadratic order in the constrained parity variables s' with terms of at most quadratic order in the constrained parity variables s' and in the unconstrained parity variables y.

In a fourth step S4, the terms of the transformed function f", which can be represented as a constraint graph 11 as shown in Figs. 2a and 2b or as a grid as shown in Fig. 4, are encoded into the qubits 16 of the topology of a quantum annealing hardware 10.

In a fifth step S5, the quantum annealing hardware 10 solves the optimization problem, and in a sixth step S6, the quantized variables s are reconstructed from the values of the constrained parity variables s' and the values of the unconstrained parity variables y, which the quantum annealing hardware 10 has computed.

**List of reference numerals**

| | |
|---|---|
| 100 | Method for solving parity encoded optimization problems |
| 10 | Quantum annealer hardware |
| 11 | Graph |
| 12 | Unit tile |
| 13 | Grid |
| 14 | Node |
| 15 | Group of qubits |
| 16 | Qubit |
| 17 | Edge |

S1-S6    Method steps

**Claims**

1.  Method (100) for solving parity encoded optimization problems having high-order interaction terms on quantum annealing hardware (10), wherein an optimization problem is encoded in a function f of terms of quantized variables s, wherein a parity encoded function f' is obtained from the function f by replacing the quantized variables s and products of the quantized variables s with constrained parity variables s' and by adding additional terms of higher than quadratic order in the constrained parity variables s' representing constraints on the constrained parity variables s', **characterized in that** a transformed function f" is obtained by introducing unconstrained parity variables y by replacing terms of higher than quadratic order in the constrained parity variables s' with terms of at most quadratic order in the constrained parity variables s' and in the unconstrained parity variables y.

2.  Method (100) according to claim 1, **characterized in that** the function f is a Hamiltonian H, in particular a Hamiltonian H of an Ising-model, wherein the parity encoded function f' is a parity encoded Hamiltonian H', wherein the transformed function f" is a transformed Hamiltonian H".

3.  Method (100) according to claim 1 or 2, **characterized in that** the constraints on the constrained parity variables s' ensure that a solution to the optimization problem by solving the parity encoded function f' and/or the transformed function f" is a valid solution of the function f.

4.  Method (100) according to any one of the preceding claims, **characterized in that** the terms of the transformed function f" are represented by a constraint graph (11), wherein nodes (14) of the graph (11) represent the constrained parity variables s' and the unconstrained parity variables y, and wherein the terms of quadratic order in the constrained parity variables s' and in the unconstrained parity variables y are represented as edges between the nodes (14).

5.  Method (100) according to any one of the preceding claims, **characterized in that** the quantized variables s are spin variables.

6.  Method (100) according to any one of the preceding claims, **characterized in that** the quantized variables s can take only two values, in particular +1 and -1, or +1 and 0.

7.  Method (100) according to any one of the preceding claims, **characterized in that** the constrained parity variables s' are quantized, and/or that the unconstrained parity variables y are quantized.

8.  Method (100) according to any one of the preceding claims, **characterized in that** the constrained parity variables s' can take only two values, in particular +1 and -1, or +1 and 0.

9.  Method (100) according to any one of the preceding claims, **characterized in that** the unconstrained parity variables y can take only two values, in particular +1 and -1, or +1 and 0.

10. Method (100) according to any one of claims 4 to 9, **characterized in that** multiple instances of the constraint graph (11), are connected to form a grid (13) of the constraint graphs (11).

11. Method (100) according to any one of the preceding claims, **characterized in that** the terms of the transformed function f" and/or the nodes (14) of the constraint graph (11), and/or the nodes (14) of the grid (13) of the constraint graphs (11) are mapped onto a topology of a quantum annealing hardware (10).

12. Method (100) according to claim 11, **characterized in that** each term of the transformed function and/or each node (14) of the constraint graph (11), and/or each node (14) of the grid (13) of the constraint graphs (11) is mapped onto a group (15) of qubits (16) of the quantum annealing hardware (10).

13. Method (100) according to any one of the preceding claims, **characterized in that** the quantum annealing hardware (10) has a fixed topology, which only has quadratic interaction terms.

14. Method (100) according to any one of claims 11 to 13, **characterized in that** the quantum annealing hardware (10) solves the optimization problem by calculating, in particular minimizing, the transformed function f" mapped to the topology via the constraint graph (11) and/or the grid (13), and that the corresponding quantized variables s of the function f are reconstructed from the constrained parity variables s' and in the unconstrained parity variables y of the solution calculated by the quantum annealing hardware (10).

15. Computer program product comprising instructions which, when the program is executed by a computer, cause the computer to carry out the steps of the method (100) of claims 1 to 14.

Fig. 1

Fig. 2a

Fig. 2b

Fig. 3

Fig. 4

Fig. 5

S1

S2

S3

S4

S5

S6

Fig. 6

Europäisches
Patentamt

European
Patent Office

Office européen
des brevets

## EUROPEAN SEARCH REPORT

Application Number

EP 23 15 2975

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | KILIAN ENDER ET AL: "Parity Quantum Optimization: Compiler", ARXIV.ORG, CORNELL UNIVERSITY LIBRARY, 201 OLIN LIBRARY CORNELL UNIVERSITY ITHACA, NY 14853, 13 May 2021 (2021-05-13), XP081962926, * page 1 - page 8 * * abstract; figures 1-5 * | 1-15 | INV. G06N10/60 G06N5/01 |
| A | MARTIN LEIB ET AL: "A transmon quantum annealer: decomposing many-body Ising constraints into pair interactions", QUANTUM SCIENCE AND TECHNOLOGY, vol. 1, no. 1, 16 December 2016 (2016-12-16), page 015008, XP055475018, DOI: 10.1088/2058-9565/1/1/015008 * the whole document * | 1-15 | |
| A,D | YARKONI SHEIR ET AL: "Quantum annealing for industry applications: introduction and review", REPORTS ON PROGRESS IN PHYSICS, INSTITUTE OF PHYSICS PUBLISHING, BRISTOL, GB, vol. 85, no. 10, 21 September 2022 (2022-09-21), XP020432673, ISSN: 0034-4885, DOI: 10.1088/1361-6633/AC8C54 [retrieved on 2022-09-21] * the whole document * | 1-15 | TECHNICAL FIELDS SEARCHED (IPC) G06N |

The present search report has been drawn up for all claims

| Place of search | Date of completion of the search | Examiner |
|---|---|---|
| The Hague | 12 June 2023 | Cilia, Elisa |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20180101784 A1

- WO 2022008057 A1

**Non-patent literature cited in the description**

- **ENDER et al.** Parity Quantum Optimization: Compiler. *arXiv:2105.06233v1*
- **DRIEB-SCHÖN et al.** Parity Quantum Optimization: Encoding Constraints. *arXiv:2105.06235v1*
- **SHEIR YARKONI et al.** Quantum annealing for industry applications: introduction and review. *Rep. Prog. Phys.,* 2022, vol. 85, 104001

- **S. YARKONI ; A. ALEKSEYENKO ; M. STREIF ; D. VON DOLLEN ; F. NEUKART ; T. BÄCK.** Multi-car paint shop optimization with quantum annealing. *2021 IEEE International Conference on Quantum Computing and Engineering (QCE), Broomfield, CO, USA,* 2021, 35-41
- **NEUKART et al.** Traffic Flow Optimization Using a Quantum Annealer. *Front. ICT,* 20 December 2017
- *Sec. Quantum Engineering and Technology,* 2017, vol. 4